Europäisches Patentamt

European Patent Office

Office européen des brevets

(11) Publication number: **0 223 456 B1**

# EUROPEAN PATENT SPECIFICATION

(45) Date of publication of patent specification: **24.07.91**  (51) Int. Cl.5: **B23P 19/00, B23Q 7/00**

(21) Application number: **86308435.6**

(22) Date of filing: **29.10.86**

(54) Orienting device and method.

(30) Priority: **22.11.85 US 800941**

(43) Date of publication of application:
**27.05.87 Bulletin 87/22**

(45) Publication of the grant of the patent:
**24.07.91 Bulletin 91/30**

(84) Designated Contracting States:
**BE CH DE ES FR GB IT LI NL SE**

(56) References cited:
**WO-A-82/01822**      **CH-A- 512 291**
**FR-A- 2 044 889**      **SU-A- 589 085**
**US-A- 3 717 262**      **US-A- 4 436 479**

(73) Proprietor: **Deseret Medical, Inc.**
**9450 South State Street**
**Sandy Utah 84070(US)**

(72) Inventor: **Barker, Reese H.**
**3065 North 1225 East**
**North Ogden Utah(US)**
Inventor: **Crowther, Jack W.**
**76 East 2nd Street**
**Midvale Utah 84047(US)**

(74) Representative: **Coxon, Philip et al**
**Eric Potter & Clarkson St. Mary's Court St.**
**Mary's Gate**
**Nottingham NG1 1LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus and method for using same in connection with positioning a cylinder having an oblique end whereby the slant of that end is oriented relative to the rest of the cylinder in a predetermined plane. Where the rotary position of the cylinder is not critical and speed as well as accuracy is not required, each cylinder can be positioned manually with respect to some type of fixture or jig. In a high speed operation cylinders with oblique ends have to be oriented precisely and the cylinders have to be positioned quickly in order for an automatic transfer mechanism to move into position for further assembly or operations. It is necessary to have an automatic orienting device which is simple and foolproof as well as accurate and reliable. The possible uses for such an apparatus are myriad including quality control, automatic assembly, alignment for measurement, ease of handling small components and the like. Heretofore, high-speed and accurate handling of cylindrical members with obliquely fashioned ends has been a manual operation or an inaccurate automatic technique.

Reference is made to published PCT application WO 82/01822 which discloses a method for fixing a cannula to a sleeve, and to US-A-3 717 262 which discloses an apparatus for orienting a rod or a tube having a bevelled end.

An object of the present invention is to provide an improved positioning apparatus and method of using it.

According to one aspect of the present invention we provide an apparatus for rotatably orienting two members relative to one another during axial translation of same into engagement with one another comprising:

a first magnetic field responsive member having at least a cylindrical surface thereof and an oblique end the slant of which has to be oriented,

a second member having a hollow cylindrical portion for sliding mating engagement in a bearing-like manner with said cylindrical surface to axially align said first and second members while permitting relative sliding and rotary motion therebetween,

a magnetic field emanating from a magnet located at one side of and imposed across said hollow cylindrical portion of said second member and acting to cause the portion of said oblique end having greater distal mass to be rotated about its axis toward said magnet such that the slant of the oblique end faces away from the magnet, and

an orienting means located transverse to said hollow of said second member and generally on the side opposite said magnet and positioned to engage at least a part of said oblique end during relative axial sliding movement between said first and second members.

According to another aspect we provide a method of rotatably orienting two members relative to one another, wherein one member is responsive to magnetism and has a cylindrical surface and a slanted oblique end the extended portion of which constitutes its major distal mass and the other member includes a hollow cylindrical portion in which a magnetic field emanates from one side of the cylindrical portion and an engagement stop is opposite thereto said method including the following steps:

aligning the one and the other members along a common axis;

moving the one or the other member along the common axis toward one another;

engaging the cylindrical surface of the one member with the hollow cylindrical portion of the other member to support rotary motion therebetween in a bearing-like manner about the aligned common axis while permitting relative axial motion between said members;

rotating the members relative to one another and in response to the magnetic influence on the major distal mass of the oblique end as same cuts the magnetic field;

running the slanted portion of the oblique end against the engagement stop for final precise positioning of one member relative to the other.

The apparatus disclosed herein includes a simple fixture having a hollow cylindrical inner surface which is designed for sliding mating engagement with the outer cylindrical surface of the oblique ended cylinder. The cylindrical mating surfaces of the fixture and work piece are designed to permit rotary and axial sliding movement relative to one another for ease of use. In the preferred embodiment, the fixture is stationary and the cylindrical member with an oblique end is moved along their common axis into engagement with that fixture. In its simplest form, the movement is caused by gravity acting upon the oblique-ended cylinder. Within the stationary fixture there is along one side thereof a magnet which imposes a magnetic field across the hollow of the fixture whereby axial sliding movement of the cylinder into and through the magnetic field will cause the oblique end thereof having greater mass to be rotated about its axis toward the magnet. Thus, it can be seen that the magnet acts to preliminarily orient the oblique-ended cylinder such that the slant thereof faces away from the magnet.

On the side of the fixture opposite where the magnet is a transversely oriented pin positioned to engage the slant of the obliquely-ended cylinder and in a ramp-like manner precisely sets the final rotary orientation of the obliquely-ended cylinder relative to its fixture. It can be appreciated that the two-step procedure wherein the magnetic field first roughly orients the obliquely- ended cylinder relative to the fixture and then the pin precisely positions the obliquely-ended cylinder relative to the fixture are essential to providing the speed and accuracy necessary for the final relationship between them. In an automatic assembly process, the oriented obliquely-ended cylinder and its fixture can be moved to another location wherein further operations relative to the positioned obliquely-ended cylinder can be accurately performed. In particular, the orientation of the cylinder is now known relative to the fixture such that the location of any part of the cylinder is established for purposes of further work.

The method of practicing the disclosed technique includes the steps of aligning the obliquely-ended cylinder and the fixture along a common axis then moving the obliquely-ended cylinder into the hollow interior of the fixture while engaging cylindrical surfaces of each to support rotary and sliding motion therebetween. Thereafter rotating the cylinder relative to the fixture in response to the pull of a magnetic field on the major distal mass of the oblique end, and finally setting the slanted portion of the oblique end against a stop positioned within the hollow of the fixture across from the magnetic field.

Reference is now made to the accompanying drawings, in which:-

Figure 1 is a side cross-sectional view showing the fixture of the present invention and axially aligned thereto along their common axis of both is an obliquely-ended cylinder with the slant of the oblique end at a random position (rotary angle) relative to its final position to which it will be oriented;

Figure 2 shows the obliquely-ended cylinder further into the hollow of the fixture and in particular, with cylinder surfaces engaged such that the magnet has an effect and rotates the cylinder so the mass-containing oblique end thereof is closer to the magnet; and

Figure 3 shows the final resting position of the obliquely-ended cylinder wherein the slant thereof is against an engagement stop and the cylinder is fully seated within the fixture.

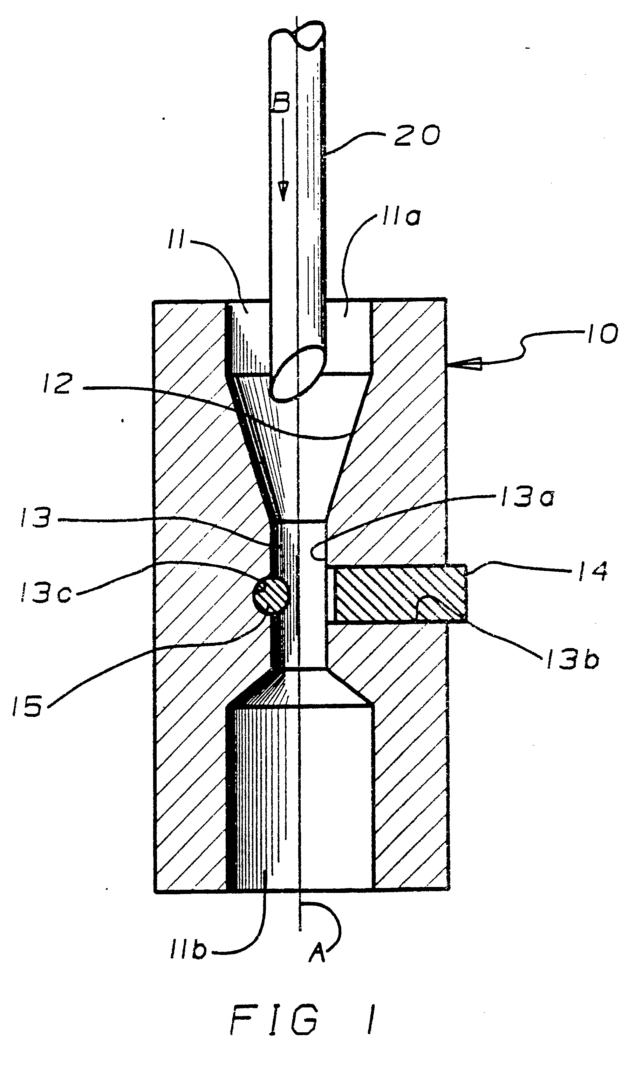

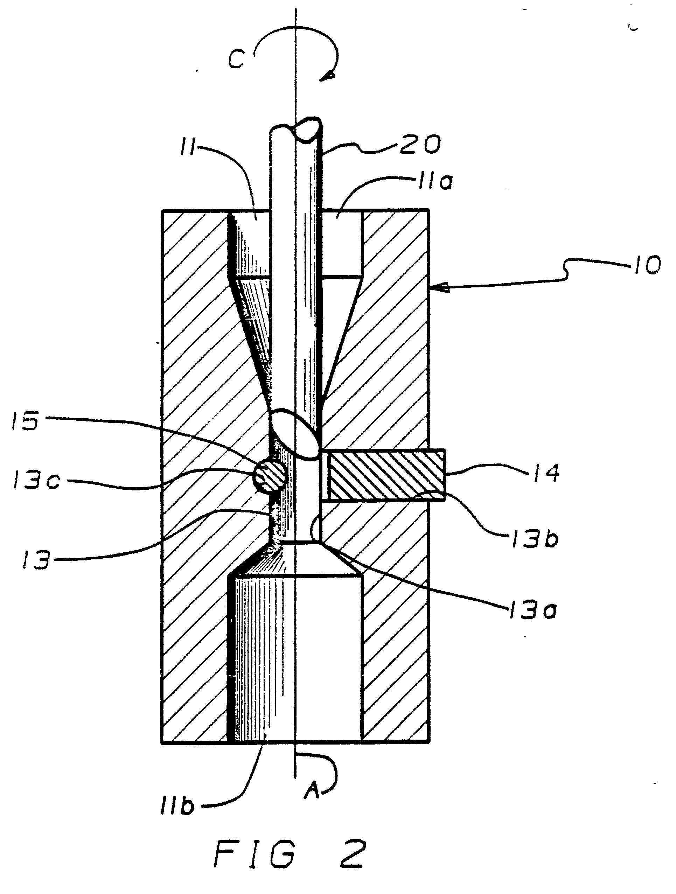

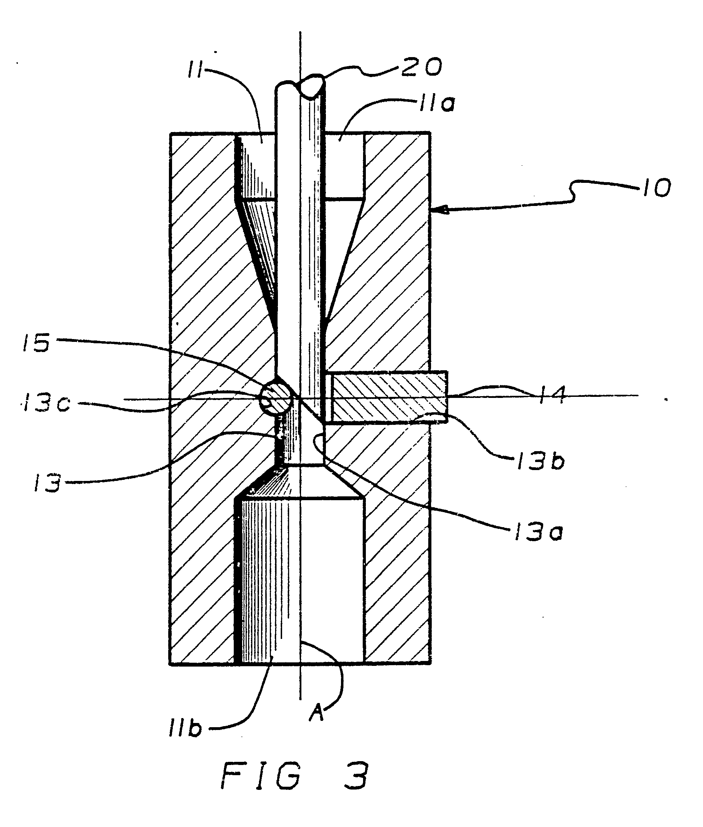

Figures 1, 2, and 3 show the fixture 10 centered about axis A. The only difference between the figures is the relative position of the obliquely-ended cylinder 20. That is to say that, in Figure 1 the obliquely-ended cylinder 20 is axially aligned for entry into fixture 10. In Figure 2, the obliquely-ended cylinder has entered fixture 10 and is almost to its seating position. In Figure 3, the obliquely-ended cylinder 20 had reached its seated position in the fixture 10. The referenced numerals are the same in all the figures.

Turning now to Figures 1, 2, and 3 the fixture 10 is hollowed and has a passage 11 extending therethrough with an inlet 11a and an outlet 11b. In the Figures the inlet 11a is shown at the top and the outlet 11b at the bottom. This positioning has nothing to do with the invention or the disclosure except to the extent that gravity is used to move the cylinder 20 along axis A. Inlet 11a extends to an inlet taper 12 which narrows the inlet passage 11a down to a central axially bore 13 in a funnel-like manner, and taper 12 can be used to axially align cylinder 20 and fixture 10. Central axial bore 13 has a cylindrical surface 13a wherein there is a magnet 14 on one side and a transverse dowel pin stop 15 on the other. Magnet 14 is located in an external recessed 13b in the side of fixture 10. The positioning of magnet 14 is such that it is proximate to the cylindrical surface 13a of central axially bore 13 whereby the magnetic field extends into the central axial bore 13 sufficiently to exert a force on the cylinder 20 without retaining same from further axial movement. Opposite the magnet 14 on the other side of central axial bore 13 is a transversely located dowel pin stop 15. The dowel pin stop 15 is positioned in a transverse opening 13c so that a small portion thereof extends across the opening of central axial bore 13. The exact position of dowel pin stop 15 and the diameter of same is a function of the particular geometry of oblique-ended cylinder 20. That is, the angle of slant, the diameter of the cylinder 20 and the force with which the cylinder and fixture are brought together. The dowel pin stop 15 is a simple press fit into a transverse hole drilled through fixture 10.

Figure 1 shows the oblique-ended cylinder 20 as it is moving along axis A toward central axial bore 13. Arrow B shows the direction of the travel of oblique-ended cylinder 20. In Figure 2 oblique-ended cylinder 20 has moved into central axial bore 13 and the outer cylindrical surface of the oblique-ended cylinder 20 has engaged the cylindrical surface 13a of central axial bore 13 causing a bearing-like relationship. Arrow C in Figure 2 shows the twist imposed upon oblique-ended cylinder 20 as a consequence of the magnetic field imposed by magnet 14 across the central axial bore 13. Consequently, the oblique-ended cylinder 20 has rotated in a clock-wise fashion as indicated by Arrow C from its position in Figure 1 to its position in Figure 2. Figure 3 shows the final resting position of oblique-ended cylinder 20. In this figure, the slanted portion of the oblique-ended cylinder 20 sets against the dowel pin stop 15 in the only position in which oblique-ended cylinder 20 is fully seated. That is to say that, the oblique-ended cylinder 20 is oriented relative to its slanted end in but one position. This is a result of the magnetic field which first twists the oblique-ended cylinder 20 as same is slid along the axis A into central axial bore 13. The rotation of the oblique-ended cylinder 20 is controlled by the cylindrical surface 13a of central axial bore 13 as same is dimension to provide a bearing support for the cylindrical end of oblique-ended cylinder 20. The greater mass of the distal portion of oblique-ended cylinder 20 is influenced by the magnetic field of magnet 14 such that the greater concentration of magnet permeable material in oblique-ended cylinder 20 is caused to be attracted to the magnet 14 rotating the cylinder 20 around as shown in Figure 2. The final positioning of the oblique-ended cylinder 20 is a result of the last movement wherein the oblique end comes to rest against the dowel stop pin 15.

As can be seen from the foregoing, the steps of operation involved in orienting the oblique-ended cylinder 20 requires aligning the axis A of the fixture 10 and the oblique-ended cylinder 20, moving them relative to one another along the axis A, engaging the cylindrical parts of each to support rotary motion therebetween rotating them relative to one another in response to the magnetic field, pulling on the major mass of the extended oblique end and the slanted portion thereof against a dowel pin to establish a precise final orientation.

While a particular arrangement has been shown and described herein, skilled artisans will no doubt appreciate that the oblique-ended cylinder 20 could be a hollow tube or not entirely cylindrical so long as there is a portion that can conjugate for supported rotary motion with the central axial bore 13. In that circumstance, however, the major diameter would have to be that cylindrical surface and all other surfaces be somewhat less than that in order to provide the requisite clearance for rotary motion. In addition, those engaging surfaces would have to be at the distal end near the oblique-ended part of the cylinder 20. Similarly, the oblique end could be faceted or less than flat so long as it is generally angular to present a portion from which to locate the cylinder. Similarly, the dowel pin stop 15 could be any kind of an abutment which would allow the oblique-ended cylinder 20 to come to a final resting position. Even the level of magnetism between the components has some range as long as there is the permitted relative axial and rotary motion.

The fixture and oblique-ended cylinder are configured to evidence a particular positioning so that the precise placement of the oblique end is relative to the fixture when they are together. Other arrangements will be obvious to those of skill in the art and what is sought to be covered by the claims which follow are the apparatus and method which take advantage of the magnet and stop for rotating and setting the cylinder into its preferred resting position in the fixture.

**Claims**

1. An apparatus for rotatably orienting two members relative to one another during axial translation of same into engagement with one another characterised in that it comprises,

   a first magnetic field responsive member (20) having at least a cylindrical surface thereof and an oblique end the slant of which has to be oriented,

   a second member (10) having a hollow cylindrical portion for sliding mating engagement in a bearing-like manner with said cylindrical surface to axially align said first and second members while permitting relative sliding and rotary motion therebetween,

   a magnetic field emanating from a magnet (14) located at one side of and imposed across said hollow cylindrical portion of said second member and acting to cause the portion of said oblique end having greater distal mass to be rotated about its axis toward said magnet such that the slant of the oblique end faces away from the magnet, and

   an orienting means (15) located transverse to said hollow of said second member and generally on the side opposite said magnet and positioned to engage at least a part of said oblique end during relative axial sliding movement between said first and second members.

2. Apparatus according to claim 1 wherein said first magnetic field responsive member is hollow.

3. Apparatus according to claim 1 or 2 in which said oblique end of said first member has at least one facet to generally form the slant thereof.

4. Apparatus according to any of claims 1 to 3 in which said hollow cylindrical portion of said second member has as its proximal end a funnel-shaped opening for guiding said first member into axial alignment with said second member.

5. Apparatus according to any of claims 1 to 4 in which the clearance fit of said cylindrical surface of said second member relative to said first is conducive to controlled axially and rotary movement of said first member.

6. Apparatus according to any of claims 1 to 5 in which said magnet (14) has a magnetic field of a strength adequate to rotate said greater distal mass of said first member toward same while allowing axial movement of said first member relative to said second member.

7. Apparatus according to any of claims 1 to 6 in which said orienting means is pin positioned transverse to said hollow cylindrical surface, normal to the axis and disposed across only a part of said hollow.

8. Apparatus according to claim 7 wherein said pin is press fit into a transverse opening through said second member.

9. Apparatus according to any of claims 1 to 8 in which said members are configured to evidence a particular positioning so that the precise placement of the oblique end relative to said second member when both are together is known.

10. A method of rotatably orienting two members relative to one another, wherein one member is responsive to magnetism and has a cylindrical surface and a slanted oblique end the extended portion of which constitutes its major distal mass and the other member includes a hollow cylindrical portion in which a magnetic field emanates from one side of the cylindrical portion and an engagement stop is opposite thereto said method including the following steps:

aligning the one and the other members along a common axis;

moving the one or the other member along the common axis toward one another;

engaging the cylindrical surface of the one member with the hollow cylindrical portion of the other member to support rotary motion therebetween in a bearing-like manner about the aligned common axis while permitting relative axial motion between said members;

rotating the members relative to one another and in response to the magnetic influence on the major distal mass of the oblique end as same cuts the magnetic field;

running the slanted portion of the oblique end against the engagement stop for final precise positioning of one member relative to the other.

**Revendications**

1. Appareil pour orienter en rotation deux organes l'un par rapport à l'autre, lors du déplacement en translation axiale de l'un pour s'engager dans l'autre, caractérisé en ce qu'il comprend:
   - un premier organe (20) sensible au champ magnétique comprenant au moins une surface cylindrique et une extrémité oblique, dont le biseau doit être orienté,
   - un deuxième organe (10) comprenant une portion cylindrique creuse destinée à s'engager comme un palier en liaison glissante avec ladite surface cylindrique pour aligner axialement les premier et deuxième organes tout en permettant, entre ces organes, un mouvement relatif de translation et de rotation,
   - un champ magnétique émis par un aimant (14) disposé d'un côté de la portion cylindrique creuse dudit second organe et créé à travers cette dite portion de façon à faire tourner la partie autour de son axe de ladite extrémité oblique ayant la plus grande masse distale vers ledit aimant, de sorte que le biseau de l'extrémité oblique soit du côté opposé à l'aimant, et
   - un moyen d'orientation (15) disposé transversalement à la partie creuse dudit second organe et sensiblement sur le côté opposé dudit aimant et positionné pour entrer en contact avec au moins une partie de ladite extrémité oblique lors du glissement axial relatif entre lesdits premier et deuxième organes.

2. Appareil selon la revendication 1, dans lequel le premier organe sensible au champ magnétique est creux.

3. Appareil selon la revendication 1 ou 2, dans lequel ladite extrémité oblique dudit premier organe a au moins une facette formant sensiblement son biseau.

4. Appareil selon l'une quelconque des revendications 1 à 3, dans lequel ladite partie cylindrique creuse dudit second organe dispose, à son extrémité proximale, d'une ouverture en forme d'entonnoir destinée à guider ledit premier organe en alignement axial avec ledit second organe.

5. Appareil selon l'une quelconque des revendications 1 à 4, dans lequel le jeu entre ladite surface cylindrique de ledit second organe et ledit premier organe favorise les mouvements limités axiaux et en rotation dudit premier organe.

6. Appareil selon l'une quelconque des revendications 1 à 5, dans lequel ledit aimant (14) a un champ magnétique dont l'intensité est adaptée à faire tourner ladite masse distale plus importante dudit premier organe vers l'aimant, tout en permettant un mouvement axial dudit premier organe par rapport audit second organe.

7. Appareil selon l'une quelconque des revendications 1 à 6, dans lequel ledit moyen d'orientation est une broche disposée transversalement à ladite surface cylindrique creuse, normalement à son axe et uniquement à travers une partie dudit creux.

8. Appareil selon la revendication 7, dans lequel ladite broche est montée par ajustage serré dans une ouverture transversale à travers ledit second organe.

9. Appareil selon l'une quelconque des revendications 1 à 8, dans lequel lesdits organes sont configurés pour obtenir un positionnement particulier, de sorte que la position de l'extrémité oblique par rapport audit second organe est connue avec précision, lorsque les organes sont assemblés.

10. Procédé pour orienter deux organes en rotation l'un par rapport à l'autre, dans lequel l'un des organes est sensible au champ magnétique et a une surface cylindrique et une extrémité oblique biseautée, dont la partie qui se prolonge constitue sa masse distale la plus grande et dans lequel l'autre organe comprend une portion cylindrique creuse dans laquelle un champ magnétique s'exerce à partir d'un côté de la portion cylindrique et une butée d'engagement est disposée à l'opposé, ledit procédé comprenant les étapes suivantes:
   - alignement de l'un et l'autre organe le long d'un axe commun;
   - déplacement de l'un ou de l'autre organe le long de l'axe commun, en direction l'un de l'autre;
   - engagement de la surface cylindrique de l'un des organes dans la portion cylindrique creuse de l'autre organe, de façon à assurer un mouvement de rotation relatif des organes autour de leur axe commun, comme dans un palier, tout en autorisant un mouvement de translation axiale entre les organes;
   - rotation relative des deux organes, en conséquence de l'influence magnétique sur la masse distale la plus grande de l'extrémité oblique lorsque celle-ci traverse le champ magnétique;
   - application de la partie biseautée de l'extrémité oblique contre la butée d'engagement pour un positionnement final précis d'un organe par rapport à l'autre.

## Patentansprüche

1. Vorrichtung zum drehbaren Orientieren zweier Elemente relativ zueinander während der Axialverschiebung derselben in (gegenseitigen) Eingriff miteinander, gekennzeichnet durch

   ein erstes, auf ein Magnetfeld ansprechenes Element (20) mit mindestens einer Zylinderfläche und einem abgeschrägten Ende, dessen Schräge orientiert werden soll,

   ein zweites Element (10) mit einem hohlzylindrischen Abschnitt für verschiebbaren, lagerartigen Passungseingriff mit der Zylinderfläche zur axialen Ausfluchtung von erstem und zweitem Element unter Ermöglichung von relativer Gleit- und Drehbewegung zwischen ihnen,

   ein Magnetfeld, das von einem an der einen Seite des hohlzylindrischen Abschnitts angeordneten Magneten (14) ausgeht und das quer über den hohlzylindrischen Abschnitt des zweiten Elements ausgeübt ist und eine Drehung des die größere distale Masse aufweisenden Abschnitts des abgeschrägten Endes um seine Achse zum Magneten hin bewirkt, so daß die Schräge des abgeschrägten Endes vom Magneten hinweg gerichtet ist, und

   ein quer zum Hohlraum des zweiten Elements und im wesentlichen an der dem Magneten gegenüberliegenden Seite angeordnetes Orientiermittel (15) in einer Lage, in welcher es während der Axialverschiebungsbewegung zwischen erstem und zweitem Element zumindest an einem Teil des abgeschrägten Endes angreift.

2. Vorrichtung nach Anspruch 1, dadurch gekennzeichnet, daß das erste, auf ein Magnetfeld ansprechende Element hohl ist.

3. Vorrichtung nach Anspruch 1 oder 2, dadurch gekennzeichnet, daß das abgeschrägte Ende des ersten Elements mindestens eine im wesentlichen seine Schräge bildende Facette aufweist.

4. Vorrichtung nach einem der Ansprüche 1 bis 3, dadurch gekennzeichnet, daß der hohlzylindrische Abschnitt des zweiten Elements an seinem proximalen Ende eine trichterförmige Öffnung zum Führen des ersten Elements in axiale Ausfluchtung mit dem zweiten Element aufweist.

5. Vorrichtung nach einem der Ansprüche 1 bis 4, dadurch gekennzeichnet, daß der Bewegungssitz der Zylinderfläche des zweiten Elements relativ zum ersten Element einer kontrollierten Axial- und Drehbewegung des ersten Elements förderlich ist.

6. Vorrichtung nach einem der Ansprüche 1 bis 5, dadurch gekennzeichnet, daß der Magnet (14) ein Magnetfeld einer Stärke liefert, die ausreicht, die größere distale Masse des ersten Elements zum Magneten hin zu drehen, dabei aber eine Axialverschiebung des ersten Elements relativ zum zweiten Element zuzulassen.

7. Vorrichtung nach einem der Ansprüche 1 bis 6, dadurch gekennzeichnet, daß das Orientiermittel ein Stift ist, der quer zur hohlzylindrischen Fläche, senkrecht zur Achse und nur über einen Teil des Hohlraums hinweg angeordnet ist.

8. Vorrichtung nach Anspruch 7, dadurch gekennzeichnet, daß der Stift in eine das zweite Element durchsetzende Querbohrung eingepreßt ist.

9. Vorrichtung nach einem der Ansprüche 1 bis 8, dadurch gekennzeichnet, daß die (beiden) Elemente zur sichtbaren Angabe einer bestimmten Positionierung ausgestaltet sind, so daß die genaue Ausrichtung des abgeschrägten Endes relativ zum zweiten Element, wenn beide zusammengeführt sind, bekannt ist.

10. Verfahren zum drehbaren Orientieren zweier Elemente relativ zueinander, wobei das eine Element auf Magnetismus anspricht und eine Zylinderfläche sowie ein schiefes, abgeschrägtes Ende, dessen verlängerter Abschnitt seine hauptsächliche distale Masse bildet, aufweist und das andere Element einen hohlzylindrischen Abschnitt aufweist, in welchem von dessen einer Seite ein Magnetfeld ausgeht und ein Anlageanschlag an der gegenüberliegenden Seite vorgesehen ist, umfassend die folgenden Schritte

Ausfluchten des einen und des anderen der Elemente längs einer gemeinsamen Achse,

Verschieben des einen oder anderen Elements längs der gemeinsamen Achse auf das jeweilige andere Element zu,

Inberührungbringen der zylinderfläche des einen Elements mit dem hohlzylindrischen Abschnitt des anderen Elements zwecks Führung der Drehbewegung zwischen ihnen in lagerartiger Weise um die ausgefluchtete gemeinsame Achse herum unter Ermöglichung einer relativen Axialverschiebung zwischen den Elementen,

Drehen der Elemente relativ zueinander und in Abhängigkeit vom magnetischen Einfluß auf die hauptsächliche distale Masse des abgeschrägten Endes, während dieses das Magnetfeld schneidet, (und)

Auflaufenlassen des schiefen Abschnitts des abgeschrägten Endes gegen den Anlageanschlag zwecks endgültiger genauer Positionierung des einen Elements relativ zum anderen.

FIG 1

FIG 2

FIG 3